# EUROPEAN PATENT SPECIFICATION

(11) **EP 0 644 821 B1**
(45) Date of publication and mention of the grant of the patent: **29.01.1997**
(21) Application number: 93910216.6
(22) Date of filing: 18.05.1993
(51) Int. Cl.: B29C 45/17

(54) **METHOD AND APPARATUS FOR INJECTION MOULDING**
VERFAHREN UND VORRICHTUNG ZUM SPRITZGIESSEN
PROCEDE ET DISPOSITIF DE MOULAGE PAR INJECTION

(30) Priority: 18.05.1992 GB 9210607
(43) Date of publication of application: 29.03.1995
(73) Proprietor: CINPRES LIMITED, Tamworth Staffordshire B79 7TA (GB)
(72) Inventor: SAYER, Matthew, Emmett 52 Wycombe Road, Buckinghamshire SL7 3JH (GB); CROW, Kenneth, Richard 18 Broadacres, Birmingham B31 5SE (GB)
(74) Representative: Bayliss, Geoffrey Cyril
(86) International application number: GB9301008
(87) International publication number: WO9323228

(56) References cited:
- EP-A- 0 283 207
- EP-A- 0 390 068
- EP-A- 0 435 025
- DE-A- 3 936 289

## Description

This invention relates to a method and apparatus for producing an injection moulding of plastics material according to the precharacterising parts of claims 1 and 5 respectively.

European Patent Specification No. 0283207 describes and claims an apparatus for producing an injection moulding of plastics material comprising means for introducing plastics material into a mould space through one or more openings. Means are also provided for introducing through a separate opening in the mould space a pressurised gas into the plastics material filling the mould space, whereby the gas creates a gas containing cavity in the plastics material, and for thereafter relieving the gas pressure within the gas containing cavity before the mould is opened. The gas supply/pressure relieving means comprises at the separate opening a valve port opening directly into the mould space, a valve member for opening and closing the valve port, and means to supply pressurised gas to the mould space. In operation, the gas supply means is arranged to supply gas through the valve member whilst the valve member is in a valve port closed position, to create the cavity. After the moulding operation has finished, the supply of pressurised gas is terminated and pressurised gas in the cavity in the moulding is vented to the atmosphere by movement of the valve member to a valve port open position. The mould is then opened.

In a preferred embodiment the pressurised gas enters the plastics material through a first passageway in the valve member. Venting of the pressurised gas from the cavity is performed through a second passageway to the atmosphere, the cavity being connected to the second passageway by withdrawing the valve member from the valve port closed position to the valve port open position. The first and second passageways converge at the opening through which the gas enters the mould space. The valve member is connected to the piston of a piston and cylinder for moving the valve member between its closed and open positions, and is positioned in the second passageway so that when the valve member is withdrawn the pressurised gas passes around the valve member into the second passageway and thereby to the atmosphere. The outlet end of the first passageway in the valve member is defined by a screw on cap containing a non-return valve comprising a captive ball. However, downstream of the ball, there is a short length of the first passageway into which plastics material can enter and which must be cleared by the pressurised gas before the gas penetrates the plastics material to form the cavity.

EP-A-0390068 discloses an arrangement in which a valve needle controls both the introduction of plastics material and pressurised gas through the same opening in a mould cavity. The valve needle remains open both during introduction and venting of the gas containing cavity formed in the plastics material.

In EP-A-0435025, there is provided a gas injection nozzle at a separate position in the mould cavity from the injection channel for molten plastics material. The inner end of the gas injection nozzle has a transverse outlet channel which in its withdrawn position is surrounded by a peripheral section of a sleeve.

DE-A-3936289 likewise provides a hollow needle for introducing gas at a position distinct from the opening for introducing molten plastics material. A needle core is movably mounted in the needle for varying the aperture size through which gas is discharged into the mould cavity.

The object of the present invention is to prevent plastics material from entering the end of the gas supply passage.

According to the invention there is provided a method of producing an injection moulding of plastics material comprising introducing a supply of plastics material through one or more openings in a mould space, introducing by means of at least one gas supply passage a pressurised gas through a separate opening in the mould space into the plastics material filling the mould space whereby the gas creates a gas containing cavity in the plastics material, opening and closing of the gas supply passage being controlled by a valve which is opened by the pressurised gas, and thereafter relieving the gas pressure in the cavity through a second valve controlled passage opening into the mould space, before opening the mould, characterised in that the valve comprises a valve port at the outlet end of the gas passage, and the method includes employing a valve member extending longitudinally of the gas passage and movable between extended and withdrawn positions for opening and closing the valve port respectively, which valve member at least when in its extended or valve port open position protrudes into the mould space and penetrates the plastics material thereby assisting the gas to enter the plastics material to create the gas containing cavity therein, withdrawing the valve member into its valve port closed position prior to relieving the gas pressure in the cavity, whereby with the valve member in its withdrawn or port closed position plastics material is shut off from entering the end of the passage from the mould space, and subsequently relieving the gas pressure in the gas containing cavity through the second valve controlled passage opening whilst maintaining the valve member in its valve port closed position.

The pressure of the gas preferably moves the valve member into its extended or valve port open position and also maintains the valve member in its extended position.

Preferably the valve member protrudes into the mould space also when in its withdrawn or valve port closed position.

The valve member is preferably spring urged into its valve port closed position.

The invention also provides an apparatus for producing an injection moulding of plastics material comprising means for introducing a supply of plastics material through one or more openings in a mould space, at least one gas supply passage for introducing a pressurised gas through a separate opening in the mould space into the plastics material filling the mould space whereby the gas creates a gas containing cavity in the plastics material, the gas pressure within the cavity thereafter being relieved through a second valve controlled passage opening into the mould space, before the mould is opened, and a control valve for opening and closing the gas supply passage, the valve being opened by the pressurised gas, characterised in that the valve comprises a valve port at the outlet end of the gas passage and a valve member extending longitudinally of the gas passage which is movable between extended and withdrawn positions for opening and closing the valve port respectively, which valve member at least when in its extended or valve port open position protrudes into the mould space and penetrates the plastics material thereby assisting the gas to flow into the plastics material to create the gas containing cavity therein, and means for withdrawing the valve member into its valve port closed position prior to relieving the gas pressure in the cavity, whereby with the valve member in its withdrawn or valve port closed position plastics material is shut off from entering the end of the passage from the mould space.

The valve member preferably has a head for closing the valve port, the head being tapered to assist the valve member to penetrate the plastics material.

A spring is preferably provided which urges the valve member into its valve port closed position.

Preferably the valve member when in its valve port closed position engages a stop whereby the plastics material filling the mould space cannot retract the valve member further into the gas supply passage.

In the preferred embodiment of the invention the gas supply means is combined with means for relieving the gas pressure within the gas containing cavity before the mould is opened, said combined gas supply/pressure relieving means comprising at said separate opening a second valve port opening directly into the mould space, and a second valve member for opening and closing the second valve port, said second valve member containing said gas supply passage through which gas enters the mould space whilst the second valve member is in a position closing the second valve port, the second valve member subsequently being moved to open the second valve port to effect venting of the cavity through the second passage to the atmosphere due to movement of the second valve member to open the second valve port.

Preferably said first and second passages converge at the opening through which the gas enters the mould space. The second passage preferably contains the second valve member whereby when the second valve member is opened the pressurised gas passes around the second valve member into the second passage and thereby to the atmosphere.

It is also preferred that the second valve member is connected to the piston of a piston and cylinder for moving the second valve member between its valve port closed and valve port open positions.

By way of example, a specific embodiment in accordance with the invention will be described with reference to the accompanying drawings in which:-
Figure 1 shows an injection moulding machine having a hot runner manifold;
Figure 2 is a detail sectional view of the rectractable gas supply nozzle having a passage through which pressurised gas enters the plastics material in the mould space, the nozzle being in its valve port closed position, and the shut-off valve member in the passage of the nozzle being in its withdrawn or valve port closed position;
Figure 3 shows the shut-off valve member extended by the gas pressure into its valve port open position to allow gas to enter the plastics material in the mould space; and
Figure 4 shows the gas supply nozzle retracted for venting of the cavity.

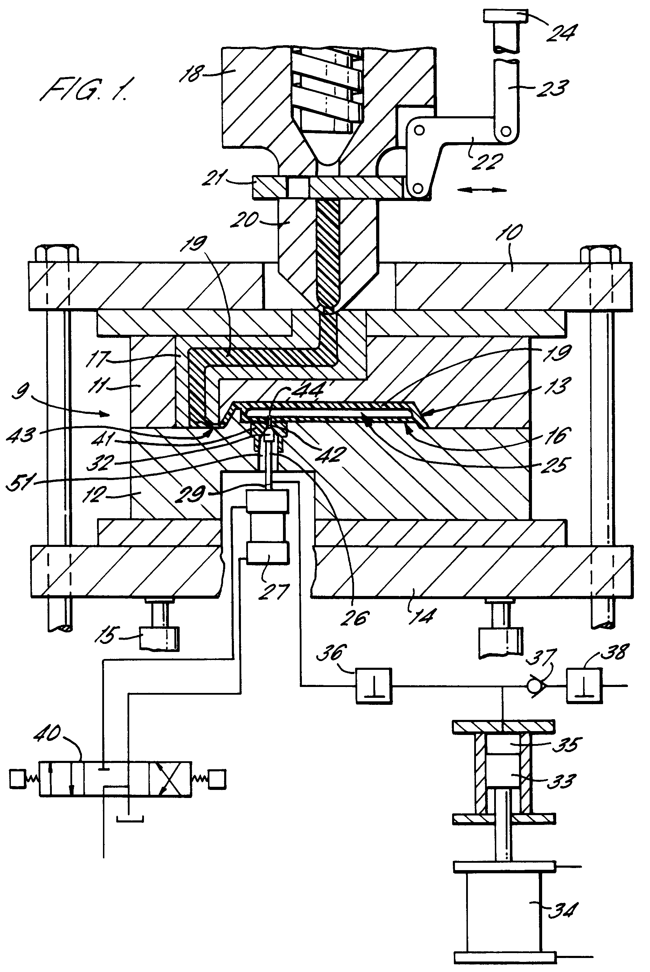

This example concerns an apparatus for producing injection mouldings of plastics material which is based on the apparatus illustrated in Figure 1 of British Patent Specification No. 2202181. Also, in general terms, the process of injection moulding is the same as described in that prior specification.

More particularly, a mould 9 of an injection moulding machine has upper and lower parts 11, 12 defining a mould space 13 of complex design and incorporating a rib 16. The mould parts 11, 12 are mounted between a fixed upper platen 10 and a lower platen 14 movable by a hydraulic ram 15. Also, in this embodiment, within the upper mould part 11 is a hot runner manifold 17 leading to a desired point of entry or opening 43 to the mould space 13.

A screw ram 18 is provided for introducing molten thermoplastic material 19 through a nozzle assembly 20 to the hot runner manifold 17 and hence through the opening 43 into the mould space 13. The nozzle assembly is provided with a shut-off slide valve 21 activated by a bell-crank lever 22 and a link 23 connected to a hydraulic cylinder 24. The valve 21 is shown in its closed position at the end of that part of the moulding cycle which includes the introduction of the plastics material. The closed valve 24 prevents any back flow of plastics material to the barrel of the screw ram, which may then be refilled with plastics material in preparation for the next moulding cycle.

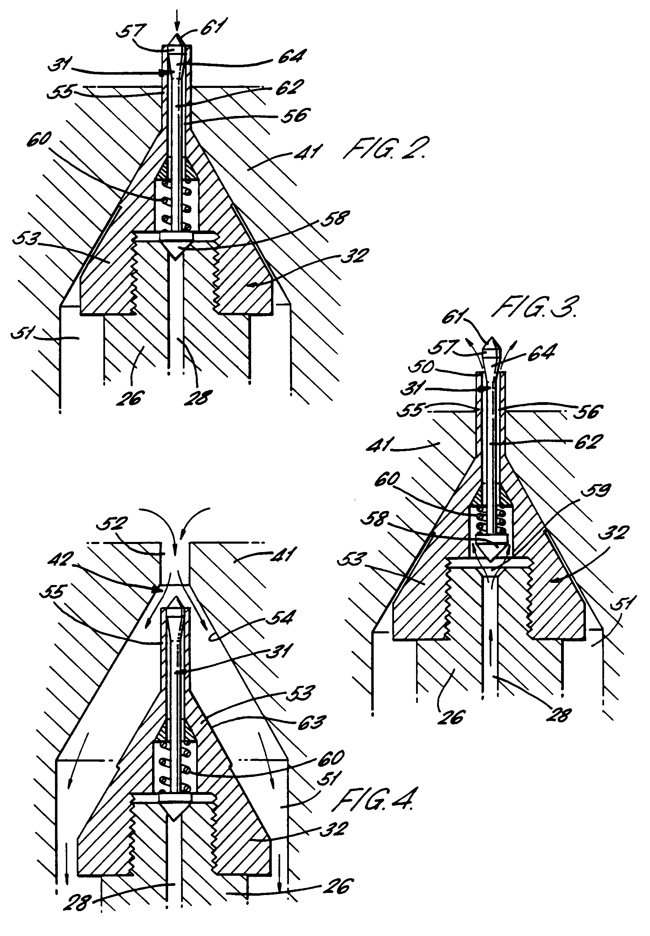

The passage through which pressurised gas is introduced to create a gas containing cavity 25 in the plastics material 19 is the bore 28 of a retractable gas supply nozzle or valve member 26 connected to the piston 29 of a hydraulic or pneumatic cylinder 27. The downstream end of the nozzle 26 is located at a separate opening 44 in the mould space and includes a shut-off control valve comprising an axially movable valve member 31 which is held captive by a screw-on cap 32 and which will be described in detail below with reference to Figures 2 to 4. Pressurised gas, e.g. nitrogen, is supplied to the upstream end of the nozzle 26 from a chamber 35 by a piston and cylinder 33, 34. The chamber 35 is connected to the nozzle 26 via a solenoid operated valve 36, and to a gas supply (not shown) via a non-return valve 37 and a pressure regulator 38.

Surrounding the nozzle 26 is a second passage 51 which adjacent its inner end has a valve port 42 connected by a short passageway 52 leading to the opening 44 in the mould space 13, and provided in this embodiment by an insert 41 in the lower mould part 12. Also, in this embodiment, the outer end of the passage 51 is open to the atmosphere.

The screw-on cap 32 of the nozzle 26 comprises a frusto-conical part 53 providing an externally tapered surface 63 capable of sealing engagement with a conical valve seat 54 of the valve port 42, and a leading cylindrical part 55 adapted, in this embodiment, to protrude into the mould space through the short passageway 52. The extent to which the part 55 protrudes into the mould space when the valve port 42 is closed may be varied, or indeed the end of the part 55 may be substantially flush with the mould surface. Within a bore 56 in the cap 32 through which gas enters the mould space, there is positioned the movable valve member 31 of the shut-off valve, which valve member 31 extends longitudinally of the bore 56 which is a continuation of the bore 28 of the nozzle. The bores 28, 56 together comprise the gas supply passage in nozzle 26 and the outlet end of bore 56 is the orifice of a valve port 50 at the outlet end of the gas passage. At the leading end of the valve member 31 there is provided a head 57 which when the valve member 31 is withdrawn enters the orifice of valve port 50 at the outlet end of the bore 56 and closes the valve port 50 thereby shutting off the outlet end of the gas supply passage against the ingress of plastics material filling the mould space. The head 57 also has a protruding tapered end portion, which, in this embodiment, is a cone 61, for piercing the skin of the plastics material and penetrating further into the plastics material, thereby assisting the gas to enter the plastics material to create the required cavity. The head 57 is connected to the stein 62 of the member 31 by a section 64 having a reverse taper. This section 64 assists to align the head 57 to close the valve port 50 at the outlet end of the bore 56 when the member is drawn therein. The valve member 31 also has a diamond shaped head 58 at its trailing end for engagement with a countersink surface 59 at the outlet end of the bore 28 in the nozzle 26 which stops the member 31 being withdrawn further without fully blocking off the passage 28. The valve member 31 acts as a shuttle within the bore 56 between a withdrawn position (Figure 2), in which the trailing head 58 abuts the countersink surface 59 and the leading head 57 closes the valve port 50 at the outlet end of the bore 56, and an extended position (Figure 3) in which the cone 61 and the head 57 penetrate the plastics material and the pressurised gas is permitted to flow through the passage formed by bores 28, 56 in series into the plastics material within the mould space 13. In both positions of the valve member 31, at least the cone 61 of the valve member protrudes into the mould space 13. A spring 60 initially urges the valve member 31 into its withdrawn or valve port closed position but can be overcome by the gas pressure when the pressurised gas is permitted to flow into the bore 28, the diamond shaped head 58 increasing the surface area against which the gas acts and allowing the gas pressure to be applied to the surface of the reverse tapered section 64. When the valve member 31 is moved by the gas pressure into its extended or valve port open position, the valve member protrudes further into the mould space 13 and penetrates deeper into the plastics material thereby assisting the pressurised gas to enter the plastics material.

The piston and cylinder 29, 27 is controlled via a solenoid operated valve 40 by control means (not shown) to move the nozzle 26 between a forward position (Figures 1 to 3) and a withdrawn position (Figure 4). In the forward position, the frusto-conical part 53 of the cap 32 of the nozzle or valve member 26 closes the valve port 42 and the cylindrical part 55 of the cap extends into the passageway 52. The pressure applied by the piston 29 is greater than the pressure applied by the plastics material within the mould space 13 and the back pressure of the gas which is creating the gas containing cavity 25. In the withdrawn or valve port open position of the nozzle or valve member 26, gas pressure within the cavity 25 is relieved through the opening 44, i.e. gas from the cavity readily passes through the passageway 52, the valve port 42 and the passageway 51 in succession and thereby around the nozzle 26 to the atmosphere. The valve member 31 has then been returned to its withdrawn or valve port closed position by the spring 60 and the head 57 prevents the gas passing back through the bore 56.

In operation, at the start of the moulding cycle the nozzle or valve member 26 is held forward under pressure by the piston and cylinder 29, 27 thereby closing the valve port 42, and the valve member 31 is spring urged into its withdrawn or valve port closed position (Figure 2). The screw ram 18 contains plastics material and the slide valve 21 is open. The chamber 35 is also filled with pressurised gas, and the valves 36 and 39 are both closed.

Operation of the screw ram 18 introduces the plastics material 19 into the mould space 13 through the opening 43 via the hot runner manifold 17. Simultaneously, a gas delay timer is started. At the end of this delay time, the outlet end of the nozzle 26 is covered by plastics material, but the valve member 31 is still withdrawn in its valve port closed position preventing the ingress of plastics material into the bore 56. The valve 36 is then opened and the piston and cylinder 33, 34 is operated to introduce gas through the nozzle 26. The pressurised gas moves the valve member 31 into its extended or valve port open position (Figure 3) in which the cone 61 and the leading head 57 of the valve member 31 penetrate further the plastics material. The gas then flows through the bores 28, 56 into the plastics material within the mould space to create a gas containing cavity 25 in the plastics material. The pressurisation in the gas is maintained by the piston and cylinder 33, 34 whereby the gas in the plastics material causes the plastics material to flow throughout the mould space with the gas containing cavity within the plastics material, the cavity thereby extending with the plastics material until the plastics material has extended over the whole of the mould space. The gas flow pressure to the cavity 25 is also maintained to hold the plastics material in the mould space positively against the mould surface as the plastics material solidifies and cools until the moulding can itself sustain the form dictated by the mould surface.

The valve 36 is closed and the piston 33 withdrawn. The cylinder 34 may be refilled with another quantity of gas under pressure.

The valve member 31 is returned by the spring 60 to its withdrawn or valve port closed position, the reverse tapered section 64 aligning the head 57 to enter the bore 56.

Furthermore, the valve 40 is reversed so that the piston 29 withdraws the nozzle 26 to open the valve port 42, the gas in the gas containing cavity passing out through the opening 44, the open valve port 42, and the second passageway 51 to the atmosphere (Figure 4), thereby relieving the gas pressure in the cavity 25. The mould is then opened and the moulding removed. Finally, the piston and cylinder 29, 30 is operated to return the nozzle 26 to its forward position (Figure 2) to await the introduction of plastics material during the next moulding cycle.

It will be appreciated that the leading head 57 of the valve member 31 effectively prevents the passage 56 through which pressurised gas is introduced into the plastics material filling the mould space, from becoming blocked by the plastics material.

Also, the fact that the head 57 of the valve member 31 acts to pierce the skin of the plastics material and that the valve member, at least when in its extended or valve port open position, protrudes into the mould space and penetrates the plastics material assists the pressurised gas to enter the plastics material to create the required cavity. Otherwise, at least some of the gas might tend to flow back over the surface of the plastics material, i.e. between the plastics material and the mould surface, which would be detrimental to the surface finish of the moulding. This possibility is also further avoided, in the case of the present embodiment, by the cylindrical part 55 of the cap 32 protruding into the mould space 13 (see Figure 3) during the introduction of the gas.

The invention is not restricted to the specific details of the embodiment described above. For example, there may be provided a retractable nozzle 26 of the kind described at different positions or at more than one position in the mould, in the same manner as described in relation to the embodiments of Figures 4 to 9 of British Patent Specification No. 2202181. Similarly, as described in the same prior specification, two or more openings may be provided through which the molten plastics material enters the mould space 13.

## Claims

1. A method of producing an injection moulding of plastics material comprising introducing a supply of plastics material (19) through one or more openings (43) in a mould space (13), introducing by means of at least one gas supply passage (28, 56) a pressurised gas through a separate opening (44) in the mould space into the plastics material filling the mould space whereby the gas creates a gas containing cavity (25) in the plastics material, opening and closing of the gas supply passage being controlled by a valve which is opened by the pressurised gas, and thereafter relieving the gas pressure in the cavity through a second valve controlled passage (51) opening into the mould space, before opening the mould (9),
characterised in that the valve comprises a valve port (50) at the outlet end of the gas passage (56), and the method includes employing a valve member (31) extending longitudinally of the gas passage (56) and movable between extended and withdrawn positions for opening and closing the valve port (50) respectively, which valve member (31) at least when in its extended or valve port open position protrudes into the mould space (13) and penetrates the plastics material thereby assisting the gas to enter the plastics material to create the gas containing cavity (25) therein, withdrawing the valve member (31) into its valve port closed position prior to relieving the gas pressure in the cavity (25), whereby with the valve member (31) in its withdrawn or valve port closed position plastics material is shut off from entering the end of the passage (56) from the mould space (13), and subsequently relieving the gas pressure in the gas containing cavity (25) through the second valve controlled passage opening whilst maintaining the valve member (31) in its valve port closed position.

2. A method as claimed in Claim 1, characterised in that the pressure of the gas moves the valve member (31) into its extended or valve port open position and also maintains the valve member in its extended position.

3. A method as claimed in Claim 1 or Claim 2, characterised in that the valve member (31) protrudes into the mould space (13) also when in its withdrawn or valve port closed position.

4. A method as claimed in any one of the preceding claims, characterised in that the valve member (31) is spring urged into its valve port closed position.

5. Apparatus for producing an injection moulding of plastics material comprising means for introducing a supply of plastics material (19) through one or more openings (43) in a mould space (13), at least one gas supply passage (28, 56) for introducing a pressurised gas through a separate opening (44) in the mould space (13) into the plastics material filling the mould space (13), whereby the gas creates a gas containing cavity (25) in the plastics material, the gas pressure within the cavity thereafter being relieved through a second valve controlled passage (51) opening into the mould space (13), before the mould (9) is opened, and a control valve for opening and closing the gas supply passage (56), the valve being opened by the pressurised gas, characterised in that the valve comprises a valve port (50) at the outlet end of the gas passage and a valve member (31) extending longitudinally of the gas passage (56) which is movable between extended and withdrawn positions for opening and closing the valve port (50) respectively, which valve member (31) at least when in its extended or valve port open position protrudes into the mould space (13) and penetrates the plastics material thereby assisting the gas to flow into the plastics material to create the gas containing cavity (25) therein, and means (60) for withdrawing the valve member (31) into its valve port closed position prior to relieving the gas pressure in the cavity (25), whereby with the valve member (31) in its withdrawn or valve port closed position plastics material is shut off from entering the end of the passage (56) from the mould space (13).

6. Apparatus as claimed in Claim 5, characterised in that the valve member (31) has a head (57) for closing the valve port (50), the head being tapered (61) to assist the valve member (31) to penetrate the plastics material.

7. Apparatus as claimed in Claim 5 or Claim 6, characterised in that the valve member (31) protrudes into the mould space (13) also when in Its valve port closed position.

8. Apparatus as claimed in any one of Claims 5 to 7, characterised in that a spring (60) is provided which urges the valve member (31) into its valve port closed position.

9. Apparatus as claimed in any one of Claims 5 to 8, characterised in that the valve member (31) when in its valve port closed position engages a stop (59) whereby the plastics material filling the mould space (13) cannot retract the valve member further into the gas supply passage (56).

10. Apparatus as claimed in any one of Claims 5 to 9, characterised in that the gas supply means is combined with means for relieving the gas pressure within the gas containing cavity (25) before the mould (9) is opened, said combined gas supply/pressure relieving means comprising at said separate opening (44) a second valve port (42) opening directly into the mould space (13), and a second valve member (53) for opening and closing the second valve port (42), said second valve member(53) containing said gas supply passage (56) through which gas enters the mould space (13) whilst the second valve member (53) is in a position closing the second valve port (42), the second valve member (53) subsequently being moved to open the second valve port (42) to effect venting of the cavity through the second passage (51) to the atmosphere due to movement of the second valve member (53) to open the second valve port (42).

11. Apparatus as claimed in Claim 10, characterised in that said first (28, 56) and second (51) passages converge at the opening (44) through which the gas enters the mould space (13).

12. Apparatus as claimed in Claim 10 or Claim 11, characterised in that the second passage (51) contains the second valve member (53) whereby when the second valve member (53) is opened, the pressurised gas passes around the second valve member (53) into the second passage (51) and thereby to the atmosphere.

13. Apparatus as claimed in any one of Claims 10 to 12, characterised in that the second valve member (53) is connected to the piston (29) of a piston and cylinder (27) for moving the second valve member (53) between its valve port closed and valve port open positions.

## Patentansprüche

1. Verfahren zur Herstellung eines Spritzgußteils aus Kunststoffmaterial, das das Einführen eines Vorrats aus Kunststoffmaterial (19) durch eine oder mehrere Öffnungen (43) in einen Formraum (13), das Einführen eines unter Druck stehenden Gases durch eine getrennte Öffnung (44) in den Formraum mittels mindestens eines Gasversorgungskanals (28,56) in das den Formraum füllende Kunststoffmaterial, wodurch das Gas einen Gas enthaltenden Hohlraum (25) in dem Kunststoffmaterial erzeugt, das Öffnen und Schließen des Gasversorgungskanals, der durch ein Ventil gesteuert wird, das durch das unter Druck stehende Gas geöffnet wird, und danach das Ablassen des Gasdrucks in dem Hohlraum durch einen zweiten ventilgesteuerten Kanal (51) aufweist, der sich in den Formraum öffnet, bevor die Form (9) geöffnet wird, und wobei das Ventil eine Ventilöffnung (50) an dem Auslaßende des Gaskanals (56) aufweist, dadurch gekennzeichnet, daß das Verfahren die Verwendung eines Ventilglieds (31) einschließt, das sich längs zu dem Gaskanal (56) erstreckt, und das zwischen einer herausgestreckten und einer zurückgezogenen Stellung für das Öffnen bzw. Schließen der Ventilöffnung (50) beweglich ist, welches Ventilglied (31) mindestens, wenn es sich in seiner herausgestreckten, die Ventilöffnung freigebenden Stellung befindet, in den Formraum (13) ragt und das Kunststoffmaterial durchdringt und dadurch dabei behilflich ist, das Gas in das Kunststoffmaterial eintreten zu lassen, um den Gas enthaltenden Hohlraum (25) in dem Kunststoffmaterial zu schaffen, wobei das Verfahren es ferner einschließt, das Ventilglied (31) in eine Stellung mit geschlossener Ventilöffnung zurückzuziehen, bevor der Gasdruck in dem Hohlraum (25) abgelassen wird, wodurch das Kunstoffmaterial in der zurückgezogenen oder die Ventilöffnung schließende Stellung des Ventilglieds (31) davon abgehalten wird, von dem Formraum (13) in das Ende des Kanals (56) einzutreten, und das Verfahren ferner einschließt, hieran anschließend den Gasdruck in dem Gas enthaltenden Hohlraum (25) durch den zweiten ventilgesteuerten Kanal freizugeben, der sich öffnet, während das Ventilglied (31) in seiner die Ventilöffnung schließenden Stellung gehalten ist.

2. Verfahren nach Anspruch 1, dadurch gekennzeichnet, daß der Druck des Gases das Ventilglied (31) in seine ausgestreckte oder die Ventilöffnung öffnende Stellung bewegt, und er das Ventilglied auch in seiner ausgestreckten Stellung hält.

3. Verfahren nach Anspruch 1 oder 2, dadurch gekennzeichnet, daß das Ventilglied (31) in den Formraum (13) auch dann vorragt, wenn es in seiner zurückgezogenen Stellung oder die Ventilöffnung schließenden Stellung ist.

4. Verfahren nach einem der vorhergehenden Ansprüche, dadurch gekennzeichnet, daß das Ventilglied (31) federbelastet in seine die Ventilöffnung schließende Stellung gedrückt wird.

5. Vorrichtung zur Herstellung eines Spritzgußteils aus Kunststoffmaterial, mit einer Vorrichtung für das Einführen eines Vorrats aus Kunststoffmaterial (19) durch eine oder mehrere Öffnungen (43) in einem Formraum (13), mindestens einem Gasversorgungskanal (28,56) für das Einführen eines unter Druck stehenden Gases durch eine getrennte Öffnung (44) in dem Formraum (13) in das den Formraum (13) ausfüllende Kunststoffmaterial, wodurch das Gas einen Gas enthaltenden Hohlraum (25) in dem Kunststoffmaterial erzeugt, wobei der Gasdruck in dem Hohlraum danach durch einen zweiten ventilgesteuerten Kanal (51) abgelassen wird, der sich in den Formraum (13) öffnet, bevor die Form (9) geöffnet wird, und mit einem Steuerventil für das Öffnen und Schließen des Gasversorgungskanals (56), wobei das Ventil durch unter Druck stehendes Gas geöffnet wird, und wobei das Ventil eine Ventilöffnung (50) an dem Auslaßende des Gaskanals aufweist, dadurch gekennzeichnet, daß das Ventil ferner ein Ventilglied (31), das sich längs des Gaskanals (56) erstreckt und zwischen einer herausgestreckten und einer zurückgezogenen Stellung für das Öffnen bzw. Schließen der Ventilöffnung (50) beweglich ist, welches Ventielglied (31), mindestens, wenn es in seiner herausgestreckten oder geöffneten Stellung ist, in dem Formraum (13) vorragt und das Kunststoffmaterial durchdringt und dadurch dazu beiträgt, daß das Gas in das Kunststoffmaterial einströmt, um den Gas enthaltenden Hohlraum (25) in diesem zu schaffen, sowie eine Vorrichtung (60) aufweist, mit welcher das Ventilglied (31) in seine geschlossene Stellung zurückziehbar ist, bevor der Gasdruck in dem Hohlraum (25) abgelassen wird, wodurch bei der geschlossenen oder zurückgezogenen Stellung des Ventilglieds (31) das Kunstoffmaterial davon abgehalten wird, von dem Formraum (13) in das Ende des Kanals (56) einzutreten.

6. Vorrichtung nach Anspruch 5, dadurch gekennzeichent, daß das Ventilglied (31) einen Kopf (57) für das Schließen das Ventilanschlusses (50) aufweist, wobei der Kopf verjüngt ist (61), um dem Ventilglied (31) dabei helfen, in das Kunststoffmaterial einzudringen,

7. Vorrichtung nach Anspruch 5 oder 6, dadurch gekennzeichnet, daß das Ventilglied (31) in den Formraum (13) auch dann vorragt, wenn es in seiner geschlossenen Stellung ist.

8. Vorrichtung nach einem 5 bis 7, dadurch gekennzeichnet, daß eine Feder (60) vorgesehen ist, die das Ventilglied (31) in seine geschlossene Stellung drückt.

9. Vorrichtung nach einem der Ansprüche 5 bis 8, dadurch gekennzeichnet, daß das Ventilglied, wenn es in seiner geschlossenen Stellung ist, an einem Anschlag (59) anliegt, wodurch das Kunsststoffmaterial, das den Formraum (13) füllt, das Ventilglied nicht weiter in den Gasversorgungskanal (56) hineindrücken kann.

10. Vorrichtung nach einem der Ansprüche 5 bis 9, dadurch gekennzeichnet, daß die Gasversorgungsvorrichtung mit einer Vorrichtung für das Ablassen des Gasdrucks in dem Gas enthaltendem Hohlraum (25), bevor die Form (9) geöffnet wird, kombiniert ist, wobei die kombinierte Gasversorgungs-/Druckablassvorrichtung an der getrennten Öffnung (44) eine zweite Ventilöffnung (42) aufweist, die sich direkt in den Formraum (13) öffnet, und ein zweites Ventilglied (53) für das Öffnen und Schließen der zweiten Ventilöffnung (42) aufweist, wobei das zweite Ventilglied (53) den Gasversorgungskanal (56) enthält, durch welchen Gas in Formraum (13) eintritt, während das zweite Ventil (53) in einer Stellung ist, in der es die zweite Ventilöffnung (42) schließt, das zweite Ventilglied (53) anschließend zur Öffnung der zweiten Ventilöffnung (42) bewegt wird, um ein Druckablassen des Hohlraums durch den zweiten Kanal (51) zur Umgebungsluft infolge der Bewegung des zweiten Ventilglieds (53) zur Öffnung der zweiten Ventilöffnung (42) zu bewirken.

11. Vorrichtung nach Anspruch 10, dadurch gekennzeichet, daß die ersten (28,56) und zweiten (51) Kanäle an der Öffnung (44) konvergieren, durch welche Gas in den Formraum (13) eintritt.

12. Vorrichtung nach Anspruch 10 oder 11, dadurch gekennzeichnet, daß der zweite Kanal (51) das zweite Ventilglied (53) enthält, wodurch, wenn das zweite Ventilglied (53) geöffnet wird das unter Druck stehende Gas um das zweite Ventilglied (53) in den zweiten Kanal (51) und dadurch zur Umgebungsluft gelangt.

13. Vorrichtung nach einem der Ansprüche 10 bis 12, dadurch gekennzeichnet,daß das zweite Ventilglied (53) mit dem Kolben (29) einer Kolben-/Zylinderanordnung (27) für die Bewegung des zweiten Ventilglieds (53) zwischen seiner geschlossenen und seiner offenen Stellung verbunden ist.

## Revendications

1. Procédé de fabrication d'un moulage par injection de matière plastique comprenant l'introduction d'une quantité de matière plastique (19) via une ou plusieurs ouvertures (43) dans une cavité de moule (13), l'introduction au moyen d'au moins un passage de distribution de gaz (28, 56) d'un gaz pressurisé via une ouverture distincte (44) dans la cavité de moule dans la matière plastique remplissant la cavité de moule de manière que le gaz crée une cavité renfermant du gaz (25) dans la matière plastique, l'ouverture et la fermeture du passage de distribution de gaz étant commandées par une soupape qui est ouverte par le gaz pressurisé, puis la réduction de la pression du gaz dans la cavité via un second passage (51) commandé par soupape s'ouvrant dans la cavité de moule, avant l'ouverture du moule (9) et dans lequel la soupape comprend un orifice de soupape (50) à l'extrémité de sortie du passage de gaz (56), caractérisé en ce que le procédé comprend l'utilisation d'un organe de soupape (31) s'étendant dans le sens de la longueur du passage de gaz (56) et mobile entre des positions déployée et rétractée pour ouvrir et fermer l'orifice de soupape (50) respectivement, lequel organe de soupape (31) au moins lorsqu'il est dans sa position déployée ou d'ouverture d'orifice de soupape se projette dans la cavité de moule (13) et pénètre dans la matière plastique de manière à aider le gaz à pénétrer dans la matière plastique afin de créer la cavité renfermant du gaz (25) en son sein, la rétraction de l'organe de soupape (31) dans sa position de fermeture d'orifice de soupape avant de réduire la pression du gaz dans la cavité (25), de manière qu'avec l'organe de soupape (31) dans sa position rétractée ou de fermeture d'orifice de soupape la matière plastique ne puisse pénétrer dans l'extrémité du passage (56) depuis la cavité de moule (13), puis la réduction de la pression du gaz dans la cavité renfermant du gaz (25) par l'ouverture du second passage commandé par soupape tout en maintenant l'organe de soupape (31) dans sa position de fermeture d'orifice de soupape.

2. Procédé selon la revendication 1, caractérisé en ce que la pression du gaz déplace l'organe de soupape (31) dans sa position déployée ou d'ouverture d'orifice de soupape et maintient également l'organe de soupape dans sa position déployée.

3. Procédé selon la revendication 1 ou la revendication 2, caractérisé en ce que l'organe de soupape (31) se projette dans la cavité de moule (13) également lorsqu'il est dans sa position rétractée ou de fermeture d'orifice de soupape.

4. Procédé selon l'une quelconque des revendications précédentes, caractérisé en ce que l'organe de soupape (31) est sollicité par ressort dans sa position de fermeture d'orifice de soupape.

5. Appareil de fabrication d'un moulage par injection de matière plastique comprenant un moyen pour l'introduction d'une quantité de matière plastique (19) via une ou plusieurs ouvertures (43) dans une cavité de moule (13), au moins un passage de distribution de gaz (28, 56) pour introduire un gaz pressurisé via une ouverture distincte (44) dans la cavité de moule (13) dans la matière plastique remplissant la cavité de moule (13) de manière que le gaz crée une cavité renfermant du gaz (25) dans la matière plastique, la pression du gaz au sein de la cavité étant ensuite réduite via un second passage (51) commandé par soupape s'ouvrant dans la cavité de moule (13), avant que le moule (9) soit ouvert, et une soupape de commande pour l'ouverture et la fermeture du passage de distribution de gaz (56), la soupape étant ouverte par le gaz pressurisé, et dans lequel la soupape comprend un orifice de soupape (50) à l'extrémité de sortie du passage de gaz, caractérisé en ce que la soupape comprend en outre un organe de soupape (31) s'étendant dans le sens de la longueur du passage de gaz (56) qui est mobile entre des positions déployée et rétractée pour ouvrir et fermer l'orifice de soupape (50) respectivement, lequel organe de soupape (31) au moins lorsqu'il est dans sa position déployée ou d'ouverture d'orifice de soupape se projette dans la cavité de moule (13) et pénètre dans la matière plastique de manière à aider le gaz à pénétrer dans la matière plastique afin de créer la cavité renfermant du gaz (25) en son sein, et un moyen (60) pour rétracter l'organe de soupape (31) dans sa position de fermeture d'orifice de soupape avant de réduire la pression du gaz dans la cavité (25), de manière qu'avec l'organe de soupape (31) dans sa position rétractée ou de fermeture d'orifice de soupape la matière plastique ne puisse pénétrer dans l'extrémité du passage (56) depuis la cavité de moule (13).

6. Appareil selon la revendication 5, caractérisé en ce que l'organe de soupape (31) comporte une tête (57) pour fermer l'orifice de soupape (50), la tête étant conique (61) pour aider l'organe de soupape (31) à pénétrer dans la matière plastique.

7. Appareil selon la revendication 5 ou la revendication 6, caractérisé en ce que l'organe de soupape (31) se projette dans la cavité de moule (13) également lorsqu'il est dans sa position de fermeture d'orifice de soupape.

8. Appareil selon l'une quelconque des revendications 5 à 7, caractérisé en ce qu'un ressort (60) est adapté à solliciter l'organe de soupape (31) dans sa position de fermeture d'orifice de soupape.

9. Appareil selon l'une quelconque des revendications 5 à 8, caractérisé en ce que l'organe de soupape (31) lorsqu'il est dans sa position de fermeture d'orifice de soupape engage un arrêt (59) de manière que la matière plastique remplissant la cavité de moule (13) ne puisse rétracter l'organe de soupape plus loin dans le passage de distribution de gaz (56).

10. Appareil selon l'une quelconque des revendications 5 à 9, caractérisé en ce que le moyen de distribution de gaz est combiné avec un moyen pour réduire la pression du gaz au sein de la cavité renfermant du gaz (25) avant que le moule (9) soit ouvert, lesdits moyens de distribution et de réduction de pression du gaz combinés comprenant à ladite ouverture distincte (44) un second orifice de soupape (42) s'ouvrant directement dans la cavité de moule (13) et un second organe de soupape (53) pour ouvrir et fermer le second orifice de soupape (42), ledit second organe de soupape (53) renfermant ledit passage de distribution de gaz (56) via lequel le gaz pénètre dans la cavité de moule (13) tandis que le second organe de soupape (53) est dans une position fermant le second orifice de soupape (42), le second organe de soupape (53) étant ensuite déplacé pour ouvrir le second orifice de soupape (42) afin d'évacuer le gaz de la cavité via le second passage (51) jusqu'à l'atmosphère en raison du déplacement du second organe de soupape (53) pour ouvrir le second orifice de soupape (42).

11. Appareil selon la revendication 10, caractérisé en ce que lesdits premier (28, 56) et second (51) passages convergent à l'ouverture (44) via laquelle le gaz pénètre dans la cavité de moule (13).

12. Appareil selon la revendication 10 ou la revendication 11, caractérisé en ce que le second passage (51) renferme le second organe de soupape (53) de manière que lorsque le second organe de soupape (53) est ouvert, le gaz pressurisé passe autour du second organe de soupape (53) dans le second passage (51) et donc dans l'atmosphère.

13. Appareil selon l'une quelconque des revendications 10 à 12, caractérisé en ce que le second organe de soupape (53) est relié au piston (29) d'un ensemble cylindre-piston (27) pour déplacer le second organe de soupape (53) entre ses positions de fermeture d'orifice de soupape et d'ouverture d'orifice de soupape.
